# EUROPÄISCHE PATENTSCHRIFT

(11) **EP 0 756 229 B1**
(45) Veröffentlichungstag und Bekanntmachung des Hinweises auf die Patenterteilung: **30.05.2001**
(21) Anmeldenummer: 96110097.1
(22) Anmeldetag: 21.06.1996
(51) Int. Cl.: G06F 7/00

(54) **Verfahren zur Mehrfachnutzung einer Regelbasis in einem Fuzzy-Logic-Coprozessor**
Method for multiple use of a rule base in a fuzzy logic coprocessor
Procédé pour l'utilisation multiple d'une base de règles dans un coprocesseur à logique floue

(30) Priorität: 28.07.1995 DE 19527818
(43) Veröffentlichungstag der Anmeldung: 29.01.1997
(73) Patentinhaber: Infineon Technologies AG, 81669 München (DE)
(72) Erfinder: Menke, Manfred, 80799 München (DE)
(74) Vertreter: Zedlitz, Peter, Dipl.-Inf.

(56) Entgegenhaltungen:
- DE-A- 4 225 758
- US-A- 5 299 283

## Beschreibung

Vorrichtung zur Mehrfachnutzung einer Regelbasis in einem Fuzzy-Logic-Coprozessor.

In regelungstechnischen Prozessen kommt mehr und mehr Fuzzy Control zur Anwendung. Dabei gibt es heute neben dem Bereich der Softwarelösungen auch Hardwarelösungen, die sehr allgemein in ihrer Anwendung sind und für äußerst schnelle und zeitkritische Prozesse gedacht sind. Zudem sollen diese Hardwarelösungen als mikroelektronische Realisierung klein und stromsparend sein. Die Bearbeitungsgeschwindigkeit für die Berechnung eines scharfen Ausgangswerts ist dabei von der Fuzzifizierung, Inferenz und Defuzzifizierung bestimmt. Eine Regelbasis ist im allgemeinen so aufgebaut, daß damit mehrere scharfe Ausgangswerte berechnet werden sollen. Dabei weichen die Regeln von einem Ausgang zum anderen oft nur minimal ab.

Aus der deutschen Offenlegungsschrift DE 42 25 758 A1 ist eine Schaltungsanordnung mit einer Wirtsrecheneinheit, einem Fuzzy-Logic-Coprozessor und einem Wissensbasisspeicher bekannt, bei der sowohl mindestens ein Regelsatz einer programmierbaren Anzahl von Regeln als auch ein Speicher für eine programmierbare Anzahl von Eingangsvariablen in dem Wissensbasisspeicher abspeicherbar sind. Nachteilig ist hierbei, daß trotz des ähnlichen Aufbaus der entsprechenden Regelbasisteile für die jeweiligen Ausgangsvariablen eigene Regeln erforderlich sind und auf bereits erfolgte Berechnungen bei der Fuzzifizierung und Inferenzbildung einer oder mehrerer vorhergehender Regeln mit gleichem Bedingungsteil nicht zurückgegriffen werden kann.

Zur Verbesserung der Verarbeitungsgeschwindigkeit ist aus der PCT-Anmeldung WO 95/08796 ein Verfahren zur beschleunigten Regelauswertung in einem Fuzzy-Inference-Prozessor bekannt, bei dem der Reihe nach für jede Eingangsvariable überprüft wird, ob die Bedingungen von Regeln erfüllt sind oder nicht, und bei dem für eine jeweilige Eingangsvariable jeweils nur noch die Bedingungen von Regeln überprüft werden, deren Bedingungen für die vorhergehenden Eingangsvariablen erfüllt wären.

Die der Erfindung zugrundeliegende Aufgabe besteht nun darin, die Verarbeitungsgeschwindigkeit pro ausgegebenem scharfen Ausgangswert zu erhöhen und den benötigten Speicherplatz für die Regelbasis zu verringern. Diese Aufgabe wird erfindungsgemäß durch die Merkmale des Anspruchs 1 gelöst.

Die Vorteile der Erfindung bestehen insbesondere darin, daß ein gesamter Folgerungsteil einer Regelbasis flexibel ausgetauscht werden kann oder aber daß mehrere gesamte Folgerungsteile einer Regelbasis in einfacher Weise adressierbar sind und die Verarbeitungsgeschwindigkeit pro ausgegebenem Ausgangswert drastisch reduziert werden kann, da die Fuzzifizierung und zumindest Teile der Inferenzbildung nicht für die verschiedenen Folgerungsteile erneut durchgeführt werden müssen.

Die Patentansprüche 2 bis 6 betreffen vorteilhafte Weiterbildungen des erfindungsgemäßen Verfahrens.

Die Erfindung wird nachfolgend anhand der Zeichnungen näher erläutert. Dabei zeigt
- Figur 1: eine für das erfindungsgemäße Verfahren erforderliche Belegung eines Wissensbasisspeichers,
- Figur 2: ein Flußdiagramm zur Erläuterung des erfindungsgemäßen Verfahrens und
- Figur 3: eine Alternative eines Teiles des Flußdiagramms von Figur 2.

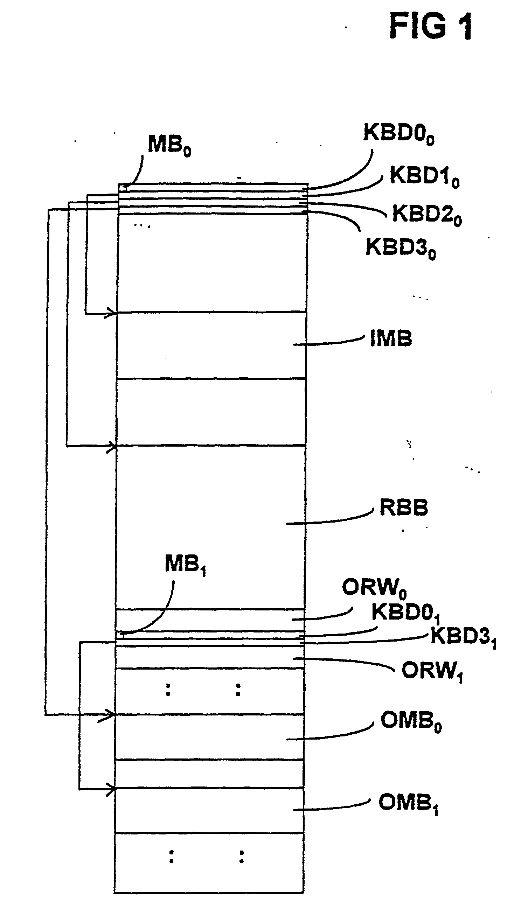

In Figur 1 ist ein Wissensbasisspeicher dargestellt, dessen Speicherwörter mit den niedrigsten Adressen Wissensbasisdeskriptorwörter KBD0₀ ... KBD3₀ aufweist, wobei das Deskriptorwort KBD0₀ ein Parameterwort, das Deskriptorwort KBD1₀ die Startadresse für einen Eingangszugehörigkeitsfunktionsblock IMB das zweite Wissensbasisdeskriptorwort KBD2₀ die Startadresse eines Regelbasisblocks, der den Bedingungsteil der Regelbasis enthält, und ein drittes Wissensbasisdeskriptorwort KBD3₀ mit der Startadresse für einen ersten Ausgangsfunktionsblock OMB₀. Durch die Startadressen können somit der Eingangszugehörigkeitsfunktionsblock IMB, der Regelbasisblock RBB und der erste Ausgangszugehörigkeitsfunktionsblock OMB₀ praktisch an beliebiger Stelle im Wissensbasisspeicher vorgesehen werden. Ein erster Folgeteil ORW₀ der Regelbasis schließt sich unmittelbar an den Regelbasisblock RBB an und benötigt somit keine eigene Startadresse. An das Ende des Folgeteils ORW₀ fügt sich unmittelbar der Reihe nach ein weiteres Parameterwort KBD0₁ und eine weitere Startadresse KDB3₁ sowie weiterer Folgeteil ORW₁ der Regelbasis an. Der weitere Wissensbasisdeskriptor KBD3₁ enthält die Startadresse für einen weiteren Ausgangszugehörigkeitsfunktionsblock OMB₁, der wiederum praktisch an beliebiger Stelle im Wissensbasisspeicher abgespeichert sein kann.

Sind darüberhinaus Folgeteile erforderlich, so erfolgt eine Abspeicherung entsprechend wie bei den weiteren Deskriptoren KBD0₁, KBD3₁ dem Folgeteil ORW₁ und dem Ausgangszugehörigkeitsfunktionsblock OMB₁, wobei sich der Reihe nach die jeweiligen Deskriptoren und der jeweilige Folgeteil an das Ende des vorhergehenden Folgeteils unmittelbar anschließen und alle weiteren Ausgangszugehörigkeitsfunktionsblöcke wiederum an beliebiger Stelle im Wissensbasisspeicher stehen können.

Die Zuordnung zwischen dem gemeinsamen Bedingungsteil der Regelbasis und den Folgeteilen der Regelbasis erfolgt lediglich durch die relative Lage im Wissensbasisspeicher.

Das Parameterwort KBD0₀ kann dabei ein Markierungsbit MB₀ und das Deskriptorwort KBD0₁ ein Markierungsbit MB₁ aufweisen. Entsprechendes gilt für weitere Parameterworte.

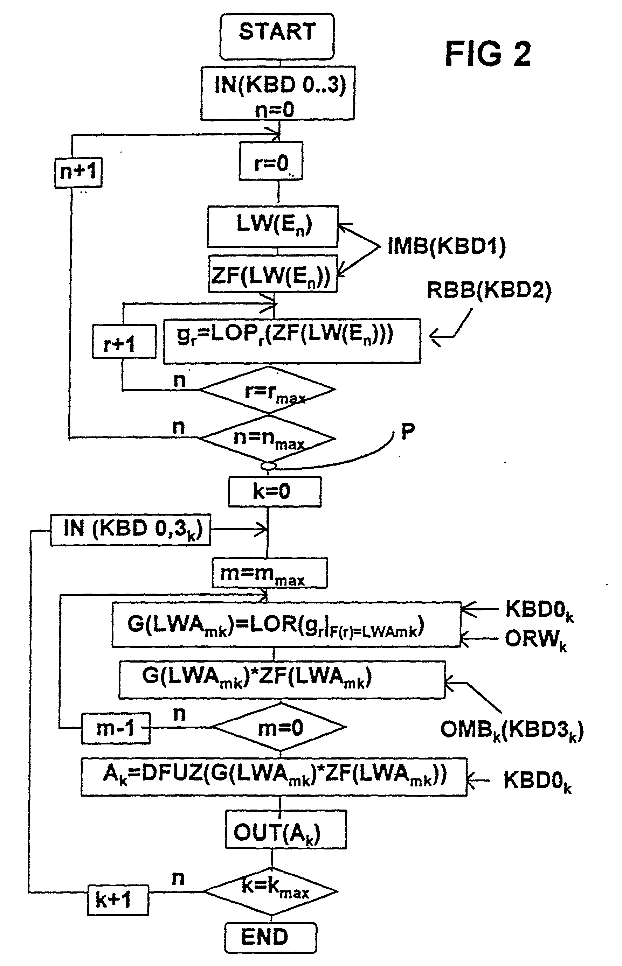

In Figur 2 ist ein vereinfachtes Ablaufdiagramm des erfindungsgemäßen Verfahrens dargestellt, wobei rechts neben dem eigentlichen Flußdiagramm durch Pfeile die erforderlichen Speichergriffe angedeutet sind.

Nach dem Beginn START werden für die erste Regelbasis die Wissensbasisdeskriptoren KBD0..3₀ eingelesen. Ferner wird eine Nummer n der Eingangsvariablen Eₙ zu Beginn auf Null gesetzt. Danach wird in einer Schleife für alle nₘₐₓ Eingangsvariablen die jeweiligen Regel die getroffenen linguistischen Werte LW(Eₙ) der jeweiligen Eingangsvariablen und entsprechende Zugehörigkeitsfunktionswerte ZF(LW(Eₙ)) mit Hilfe von Speicherzugriffen auf den Eingangszugehörigkeitsfunktionsblock IMB(KBD1), dessen Startadresse in dem Deskriptorwort KBD1 abgelegt ist, gebildet. Ferner wird zunächst eine Regelnummer r = 0 gesetzt. Danach werden für alle rₘₐₓ Regeln die entsprechenden Werte der Zugehörigkeitsfunktionen ZF(LW(Eₙ)) jeweils für eine Regel mit der Regelnummer r mit einem linguistischen Operator verknüpft. Der linguistische Operator LOP besteht dabei beispielsweise aus einer linguistischen UND-Verknüpfung. Eine linguistische UND-Verknüpfung kann dabei beispielsweise durch eine Minimumbildung bewirkt werden. Hierbei wird für jede Regel ein Regelgewicht gᵣ durch den linguistischen Operator LOPᵣ(ZF(LW(Eₙ))) gebildet, wobei die Art der linguistischen Operators in den Regeln r kodiert ist und wobei die Bedingungen der in einer Regel beteiligten Eingangsvariablen aus dem Regelbasisblock RBB abgespeichert sind, dessen Startadresse in dem Deskriptorwort KBD2 abgelegt ist. Die Bildung der Regelgewichte gᵣ erfolgt dabei für alle rₘₐₓ Regeln auf entsprechende Weise. Zum Zeitpunkt P sind somit für alle rₘₐₓ Regelgewichte gr ermittelt. Daraufhin werden alle scharfen Ausgangswerte Aₖ für k=0...kₘₐₓ gebildet, wobei die nur einmalig berechneten Regelgewichte gᵣ für alle Ausgänge Aₖ verwendet werden. Vorteilhafterweise beginnend mit der größten Nummer mₘₐₓ der Ausgangszugehörigkeitsfunktionen werden alle Regelgewichte gᵣ von Regeln mit gleichem Linguistischem Wert des jeweiligen Folgeteils zu aggregierten Regelgewichten G(LWAₘₖ) linguistisch ODER-verknüpft, wobei die Art der linguistischen ODER-Verknüpfung durch den jeweiligen Wissensbasisdeskriptor KBD0ₖ und den jeweiligen Folgeteil ORWₖ bestimmt wird. Daraufhin werden die Zugehörigkeitsfunktionen ZF(LWAₘₖ) der linguistischen Werte der Ausgangsvariablen LWAₘₖ des jeweiligen Folgeteils mit den zugehörigen aggregierten Regelgewichten G(LWAₘₖ) gewichtet, wobei die Zugehörigkeitsfunktionen aus dem jeweiligen Ausgangszugehörigkeitsfunktionsblock OMBₖ gelesen werden, dessen jeweilige Startadresse durch den jeweiligen Wissensbasisdeskriptor KBD3ₖ bestimmt ist. Der jeweilige scharfe Ausgangswert Aₖ wird durch Defuzzifikation der durch die aggregierten Regelgewichte gewichteten Zugehörigkeitsfunktionen ZF(LWAₘₖ) gebildet, wobei das jeweilige Defuzzifikationsverfahren durch den jeweiligen Wissensbasisdeskriptor KBD0ₖ bestimmt ist. Nach der Bildung des jeweiligen scharfen Ausgangswerts Aₖ wird dieser ausgegeben und neue Wissensbasisdeskriptoren geladen, solange bis alle scharfen Ausgangswerte Aₖ mit k = 0...kₘₐₓ gebildet sind und ein Ende END erreicht ist.

Ob alle scharfen Ausgangswerte Aₖ gebildet wurden kann, wie in Figur 2 gezeigt, durch Inkrementieren eines Zählers für k und einer Abfrage nach der Ausgabe des jeweiligen Wertes Aₖ, ob der Wert für k bereits den Wert kₘₐₓ erreicht hat erfolgen.

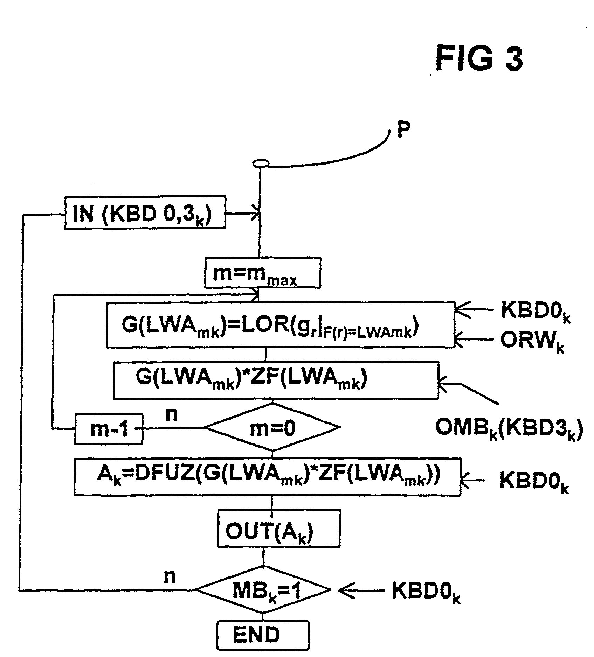

Zum anderen kann dies, wie in Figur 3 gezeigt, dadurch erreicht werden, daß in allen ersten Wissensbasisdeskriptoren KDD0ₖ, also in den Parameterworten, ein jeweiliges Markierungsbit Mbₖ vorgesehen ist, das beim letzten Wissensbasisdeskriptor KBD0ₖ mit k = kₘₐₓ beispielsweise gesetzt ist und das jeweils nach der Ausgabe OUT(Aₖ) des jeweiligen scharfen Ausgangswertes Aₖ geprüft wird, wobei diese Weiterbildung eine weitere Geschwindigkeitsverbesserung gegenüber der ersten Weiterbildung darstellt.

Eine andere Weiterbildung des erfindungsgemäßen Verfahrens besteht beispielsweise darin, daß für weitere Folgeteile nur ein Teil der Regelbasis herangezogen wird und somit nur ein Teil der einmalig berechneten Regelgewichte gᵣ zur Bildung der weiteren scharfen Ausgangswerte verwendet wird.

Für den Fall, daß alle Folgeteile ORWₖ gleich sind und die aggregierten Regelgewichte G(LWAₘₖ) somit nur einmalig berechnet werden müssen, besteht eine vereinfachte Weiterbildung des erfindungsgemäßen Verfahrens darin, daß bei der Bildung der weiteren scharfen Ausgangswerte Aₖ nur jeweils unterschiedliche Ausgangszugehörigkeitsfunktionen OMBₖ und/oder unterschiedliche Defuzzifikationsverfahren angewandt werden und daß die aggregierten Regelgewichte nur einmalig gebildet werden.

Das erfindungsgemäße Verfahren kann bevorzugt dazu verwendet werden, daß ein scharfer Ausgangswert zur Steuerung eines Prozesses und die weiteren scharfen Ausgangswerte zu Überwachungs- und/oder Vergleichszwecken (monitoring) gebildet und ausgegeben werden.

## Patentansprüche

1. Verfahren zur Mehrfachnutzung einer Regelbasis in einem Fuzzy-Logic-Coprozessor,
bei dem ein Parameterwort (KBD0₀) sowie Startadressen (KBD1, KBD2, KBD3) für Eingangszugehörigkeitsfunktionen (IMB) einen Bedingungsteil (RBB), eine Regelbasis und für Ausgangszugehörigkeitsfunktionen (OMB) gespeichert werden,
bei dem der gesamte Bedingungsteil (RBB) aller Regeln (rₘₐₓ) einer Regelbasis und ein gesamter Folgeteil (ORW₀) der Regelbasis in getrennten Blöcken direkt hintereinander gespeichert werden,
bei dem weitere gesamte Folgeteile (ORWₖ) der Regelbasis mit gleichem gesamten Bedingungsteil zusammen mit einem jeweiligen weiteren Parameterwort (KBD0ₖ) und einer jeweiligen weiteren Startadresse (KBD3ₖ) für weitere Ausgangszugehörigkeitsfunktionen (OMB) direkt hintereinander gespeichert werden, wobei eine Zuordnung zwischen dem gesamten Bedingungsteil und dem gesamten Folgeteil sowie den gesamten weiteren Folgeteilen nur durch die Speicherreihenfolge besteht,
bei dem aus (n) scharfen Eingangswerten (Eₙ) mit Hilfe von Eingangszugehörigkeitsfunktionen (IMB) und einem Bedingungsteil (RBB) der Regelbasis für alle (rₘₐₓ) Regeln Regelgewichte (gr) gebildet werden,
bei dem die einmalig gebildeten Regelgewichte (gᵣ) abhängig vom jeweiligen Folgeteil (ORWₖ) und dem jeweiligen Parameterwort (KBD0ₖ) für jeden linguistischen Wert (LWAₘₖ) der jeweiligen Ausgangsvariablen (Aₖ) nach einem jeweiligen Aggregationsverfahren, das durch das jeweilige Parameterwort bestimmt wird, zu einem jeweiligen aggregierten Regelgewicht (G(LWAₘₖ)) zusammengefaßt wird, und
bei dem die jeweiligen Ausgangszugehörigkeitsfunktionen (OMBₖ) mit den jeweiligen aggregierten Regelgewichten (G(LWAₘₖ)) gewichtet und zu einem jeweiligen scharfen Ausgangswert (Aₖ) defuzzifiziert werden, wobei das jeweils anzuwendende Defuzzifikationsverfahren durch das jeweilige Parameterwort (KBD0ₖ) bestimmt wird.

2. Verfahren nach Anspruch 1,
bei dem eine maximale Anzahl (kₘₐₓ) von gesamten Folgeteilen gespeichert wird, bei dem nach der Bildung eines jeweiligen scharfen Ausgangswertes (Aₖ) ein Zähler (k) für die bereits verarbeiteten Folgeteile inkrementiert wird und bei dem die Bildung der scharfen Ausgangswerte beendet wird, sobald der Zähler die maximale Anzahl von bearbeiteten gesamten Folgeteilen erreicht.

3. Verfahren nach Anspruch 1,
bei dem im jeweiligen Parameterwert (KBD0ₖ) ein jeweiliges Markierungsbit (MBₖ) vorgesehen wird und bei dem jeweils nach der Bildung eines jeweiligen scharfen Ausgangswerts (Aₖ) überprüft wird, ob ein letzter gesamter Folgeteil durch das letzte Markierungsbit als solcher markiert ist und die Verarbeitung daraufhin abgebrochen wird.

4. Verfahren nach einem der Ansprüche 1 bis 3,
bei dem weitere Regelbasen nur aus einem Teil der Regelbasis bestehen und nur ein Teil der einmalig berechneten Regelgewichte (gᵣ) der Regelbasis zur Bildung der weiteren scharfen Ausgangswerte (Aₖ) herangezogen wird.

5. Verfahren nach Anspruch 1 bis 4,
bei dem alle gesamten Folgeteile (ORWₖ) gleich sind und die aggregierten Regelgewichte (G(LWAₘₖ)) nur einmalig gebildet werden und bei der Bildung der weiteren scharfen Ausgangswerte (Aₖ) nur jeweils unterschiedliche Ausgangszugehörigkeitsfunktionen (OMBₖ) und/oder unterschiedliche Defuzzifikationsverfahren angewandt werden.

6. Verfahren nach einem der vorhergehenden Ansprüche,
bei dem ein scharfer Ausgangswert zur Steuerung eines Prozesses und die weiteren scharfen Ausgangswerte zur Überwachung und/oder zu Vergleichszwecken gebildet und ausgegeben werden.

## Revendications

1. Procédé pour l'utilisation multiple d'une base de règles dans un coprocesseur à logique floue,
dans lequel un mot-paramètre (KBDO₀) ainsi que des adresses de départ (KBD1, KBD2, KBD3) sont stockés pour des fonctions d'appartenance d'entrée (IMB), une partie de condition (RBB), une base de règles et des fonctions d'appartenance de sortie (OMB),
dans lequel la totalité de la partie de condition (RBB) de toutes les règles (rₘₐₓ) d'une base de règles et une partie de séquence entière (ORW₀) de la base de règles sont stockées directement l'une derrière l'autre dans des blocs séparés,
dans lequel d'autres parties de séquence entières (ORWₖ) de la base de règles dont la partie de condition entière est identique sont stockées directement les unes derrière les autres avec un autre mot-paramètre respectif (KBDOₖ) et une autre adresse de départ respective (KBD3ₖ) pour d'autres fonctions d'appartenance de sortie (OMB), une classification entre la partie de condition entière et la partie de séquence entière ainsi que les autres parties de séquence entières n'existant que par l'ordre de succession dans la mémoire,
dans lequel des pondérations de règle (gᵣ) sont formées pour toutes les règles (rₘₐₓ) à partir de (n) valeurs d'entrée nettes (Eₙ) à l'aide de fonctions d'appartenance d'entrée (IMB) et d'une partie de condition (RBB) de la base de règles,
dans lequel les pondérations de règle (gᵣ) formées une fois sont regroupées, après un procédé d'agrégation respectif qui est déterminé par le mot-paramètre respectif, de manière à former une pondération de règle (G(LWAₘₖ)) agrégée respective, en fonction de la partie de séquence respective (ORWₖ) et du mot-paramètre respectif (KBDOₖ), pour chaque valeur linguistique (LWAₘₖ) des variables de sortie respectives (Aₖ), et
dans lequel les fonctions d'appartenance de sortie respectives (OMBₖ) sont pondérées avec les pondérations de règle agrégées respectives (G(LWaₘₖ)) et sont extraites de l'état flou de manière à obtenir une valeur de sortie nette respective (Aₖ), le procédé de "défuzzification" respectif à utiliser étant déterminé par le mot-paramètre respectif (KBDOₖ).

2. Procédé selon la revendication 1, dans lequel un nombre maximum (kₘₐₓ) de parties de séquence entières est stocké, dans lequel un compteur (k) pour les parties de séquence déjà traitées est incrémenté après la formation d'une valeur de sortie nette respective (Aₖ), et dans lequel la formation des valeurs de sortie, nettes est terminée dès que le compteur atteint le nombre maximum de parties de séquence entières traitées.

3. Procédé selon la revendication 1, dans lequel un bit de marquage respectif (MBₖ) est prévu dans le mot-paramètre respectif (KBDOₖ) et dans lequel, après la formation d'une valeur de sortie nette respective (Aₖ), on vérifie à chaque fois si une dernière partie de séquence entière est marquée en tant que telle par le dernier bit de marquage, et le traitement est ensuite interrompu.

4. Procédé selon une des revendications 1 à 3, dans lequel d'autres bases de règles ne sont formées que par une partie de la base de règles et une partie seulement des pondérations de règle (gᵣ) de la base de règles calculées une fois est utilisée pour former les autres valeurs de sortie nettes (Aₖ).

5. Procédé selon une des revendications 1 à 4, dans lequel toutes les parties de séquence entières (ORWₖ) sont identiques et les pondérations de règles agrégées (G(LWAₘₖ)) ne sont formées qu'une fois, et lors de la formation des autres valeurs de sortie nettes (Aₖ), on n'emploie à chaque fois que des fonctions d'appartenance de sortie (OMBₖ) différentes et/ou des procédés de "défuzzification" différents.

6. Procédé selon une des revendications précédentes, dans lequel une valeur de sortie nette est formée et extraite pour commander un processus et les autres valeurs de sortie nettes sont formées et extraites à des fins de surveillance et/ou comparaison.

## Claims

1. Method for multiple use of a rule base in a fuzzy logic coprocessor,
in which a parameter word (KBDO₀) and start addresses (KBD1, KBD2, KBD3) are stored for input association functions (IMB), a condition part (RBB) and a rule base for output association functions (OMB),
in which the entire condition part (RBB) of all the rules (rₘₐₓ) of a rule base and an entire subsequent part (ORW₀) of the rule base are stored directly one behind the other in separate blocks,
in which further entire subsequent parts (ORWₖ) of the rule base are stored with the same overall condition part together with a respective further parameter word (KBDOₖ) and a respective further start address (KBD3ₖ) for further output association functions (OMB) are stored directly one behind the other, with an association between the overall condition part and the overall subsequent part and the overall further subsequent parts existing only by virtue of the memory sequence,
in which control weights (gᵣ) are formed for all the (rₘₐₓ) rules from (n) sharp input values (Eₙ) with the aid of input association functions (IMB) and a condition part (RBB) of the rule base,
in which the control weights (gᵣ), once they have been formed, are combined to form a respective aggregated control weight (G(LWAₘₖ)) as a function of the respective subsequent part (ORWₖ) and the respective parameter word (KBDOₖ) for each linguistic value (LWAₘₖ) of the respective output variables (Aₖ) using a. respective aggregation method which is governed by the respective parameter word, and
in which the respective output association functions (OMBₖ) are weighted with the respective aggregated control weights (G(LWAₘₖ)) and are defuzzified to form a respective sharp output value (Aₖ), with the respective defuzzification method to be used being governed by the respective parameter word (KBD0ₖ).

2. Method according to Claim 1,
in which a maximum number (kₘₐₓ) of overall subsequent parts are stored, in which, once a respective sharp output value (Aₖ) has been formed, a counter (k) for the already processed subsequent parts is incremented, and in which the formation of the sharp output values is ended as soon as the counter reaches the maximum number of processed overall subsequent parts.

3. Method according to Claim 1,
in which a respective marking bit (MBₖ) is provided in the respective parameter value (KBD0ₖ), and in which a check is in each case carried out after formation of a respective sharp output value (Aₖ) to determine whether a last overall subsequent part is marked as such by the last marking bit, and the processing is then terminated.

4. Method according to one of Claims 1 to 3,
in which further rule bases are composed only partially of the rule base, and only some of the rule weights (gᵣ) in the rule base, which are calculated once, are used to form the further sharp output values (Aₖ).

5. Method according to Claims 1 to 4,
in which all the overall subsequent parts (ORWₖ) are the same, and the aggregated control weights (G(LWAₘₖ)) are formed only once, and only respectively different output association functions (OMBₖ) and/or different defuzzification methods are used to form the further sharp output values (Aₖ).

6. Method according to one of the preceding claims,
in which one sharp output value is formed and output in order to control a process, and the further sharp output values are formed and output for monitoring and/or for comparison purposes.
